# EUROPEAN PATENT SPECIFICATION

(11) **EP 1 669 577 B1**
(45) Date of publication and mention of the grant of the patent: **22.04.2009**
(21) Application number: 05027015.6
(22) Date of filing: 09.12.2005
(51) Int. Cl.: F02D 41/20, H03K 17/64

(54) **Inductive load driver with overcurrent detection**
Treiber für induktive Lasten mit Überstromerfassung
Circuit de commande pour charge inductive avec détection de surintensité

(30) Priority: 10.12.2004 JP 2004358891
(43) Date of publication of application: 14.06.2006
(73) Proprietor: DENSO CORPORATION, Kariya-city, Aichi-pref., 448-8661 (JP)
(72) Inventor: Ogasawara, Kazuki, Kariya-city Aichi-pref. 448-8661 (JP); Kamiya, Takamichi, Kariya-city Aichi-pref. 448-8661 (JP)
(74) Representative: Winter, Brandl, Fürniss, Hübner Röss, Kaiser, Polte Partnerschaft Patent- und Rechtsanwaltskanzlei

(56) References cited:
- EP-A- 0 309 753
- DE-A1- 3 727 498
- DE-A1- 10 040 246
- JP-A- 2002 180 878
- US-A1- 2005 229 898

## Description

### FIELD OF THE INVENTION

The present invention relates to electric load drivers with overcurrent detection and protection. More particularly, the present invention relates to electric load drivers capable of detecting overcurrent due to a ground fault in a signal common terminal (*COM*) when detecting electric loads, such as solenoids of fuel injectors connected to a common pressure accumulator (common rail).

### BACKGROUND OF THE INVENTION

In a diesel fuel injection system with a common rail, high-pressure fuel delivered from a high-pressure supply pump is accumulated in the common rail to which injectors are connected. The accumulated high-pressure fuel is injected into combustion chambers when the injectors are actuated to open. In such a diesel fuel injection system, as the injector, a solenoid injector normally with a compact size and much less electrical power consumption has been preferably used.

The solenoid injector is provided with a solenoid as an inductive load, and is opened and closed by the solenoid driven by an inductive load driver.

One example of such inductive load drivers is disclosed in Japanese Unexamined Patent Publication No. 2002-180878. Fig. 5 illustrates the circuit layout of an inductive load driver 100 normally adopted in, for example, a four cylinder diesel fuel injection system.

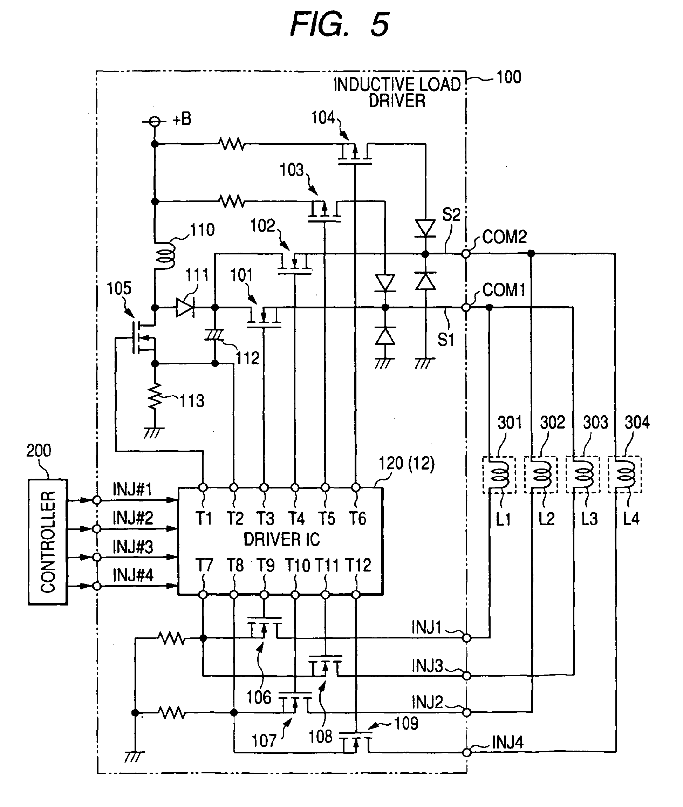

Referring to Fig. 5, the inductive load driver 100 works as a control circuit to individually control drive of each of injectors 301 to 304 for injecting fuel into each of the four cylinders based on drive instructions given from a controller 200. The controller 200 includes a common microcomputer as a main component, and the microcomputer has a CPU and various memories. Various variable parameters measured by various sensors, such as an acceleration position, an engine coolant temperature, and the like, which represent the operating status of the engine, are input to the controller 200. The controller 200 works to generate drive instructions for each individual cylinder, thereby providing them to the inductive load driver 100.

Each of the injectors 301 to 304 is designed to a normally-closed solenoid value. For the sake of simplicity, solenoid coils *L1* to *L4* of the injectors 301 to 304 are only illustrated in Fig. 5, but each injector is equipped with other elements, such as a return spring, a valve disc, an actuator, and the like. For example, the movable valve disc is located at an injection port closing position by biasing force applied from the return spring. When the solenoid coil is energized, the actuator is driven to move the valve disc to an injection port opening position from the injection closing position. This allows the injector to inject fuel through the injection port.

When power distribution to the solenoid coil is interrupted, the actuator is driven to move the valve disc to the injection port closing position from the opening position, resulting that the fuel injection is stopped.

One end of each of the coils *L1* and *L3* is connected to a signal common terminal *COM1* of the driver 100, and one end of each of the coils *L2* and *L4* is connected to a signal common terminal *COM2* thereof. The other ends of the coils *L1, L2, L3*, and *L4* are connected to terminals *INJ1, INJ2, INJ3*, and *INJ4* of the driver 100, respectively.

The inductive load driver 100 to which the coils *L1* to *L4* are connected is provided with a driver IC (Integrated Circuit) 120 into which the driving instructions provided from the controller 200 are input. The driver 100 is also provided with FETs (Field Effect Transistors) 101 to 109 as switching elements. The driver IC 120 has terminals T1 to T12, and the FETs 101 to 109 are connected to the driver IC 120 through the terminals *T*3, *T4, T5, T6, T1, T9, T10, T11*, and *T12.* The driver IC 120 is operative to control to individually turn the FETs 101 to 109 on and off.

The FETs 101 and 102 serve as switching elements for controlling initial drive of each of the coils *L1* to *L4* in order to immediately start the injectors 31 to 34. The FETs 101 and 102 are located in power supply lines *S1* and *S2* connecting a power supply circuit and the common terminals *COM1* and *COM2.* The power supply circuit is designed as a DC to DC converter composed of the FET 105, a step-up coil 110, a diode 111, and a capacitor 112.

The FETs 101 and 102 allow open or close of the power supply lines *S1* and *S2*. Depending on the operations of the driver 100, the capacitor 112 is repeatedly:
charged based on a voltage boosted by the step-up coil 110; and
discharged based on the charged voltage therein so that the discharge current is applied through the common terminals *COM1* and *COM2*.

The FET 105 is controlled to be turned on of off based on the magnitude of the discharge current fetched from the capacitor 112 through the terminal *T2* of the driver IC 120.

The FETs 103 and 104 are operative to carry out constant current drive of the coils *L1* to *L4* after the initial drive.

Specifically, the FETs 103 and 104 are connected to the power supply lines *S1* and *S2* and to a battery (+*B*) in parallel to the FETs 101 and 102 so that they allow open or close of the lines between the battery and the power supply lines *S1* and *S2*.

The driver IC 120 is operative to generate drive signals to apply them so as to individually turn on or off of the FETs 101 to 104.

The FETs 106 to 109 are connected between the ground and the terminals *INJ1* to *INJ4* connected to the other ends of the coils *L1* to *L4* so that they individually allow open or close the lines between the ground and the terminals *INJ1* to *INJ4*. Specifically, the driver IC 120 controls to selectively turn the FETs 106 to 109 on or off in synchronization with applying the drive signals to the FETs 101 to 105, making it possible to selectively provide conductive paths between the battery side and the ground through the coils *L1* to *L4*. In other words, selectively turning on or off of the FETs 106 to 109 in synchronization with the selective apply of the drive signals to the FETs 101 to 105 allows the coils *L1* to *L4* to be selectively brought into conduction.

In the inductive load driver 100, as illustrated by a broken line, a ground fault in the common terminal *CM1* or *CM2* may cause an overcurrent to flow the FET 101 or 102; magnitude of this overcurrent exceeds the allowable level of each of the FETs 101 and 102.

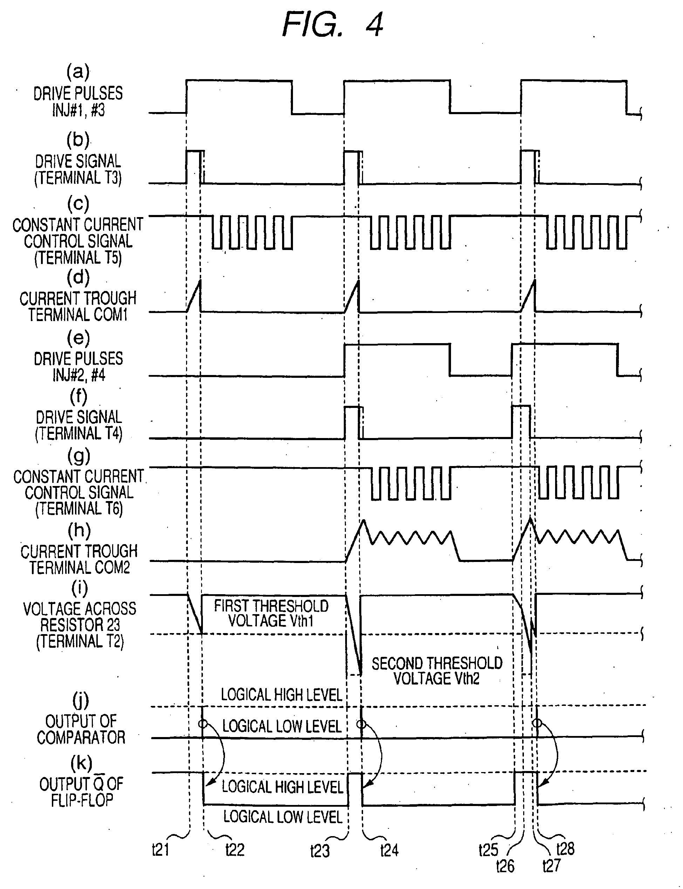

In order to protect the FETs 101 and 102 against the overcurrent, there is provided a resistor 113 connected between the ground and the capacitor 112 constituting the DC to DC converter (see Figs. 4 and 5). Measurement of the level of the current flowing through the resistor 113 permits detection of whether the overcurrent occurs.

As specific means for overcurrent detection, an overcurrent detecting circuit is installed in the driver IC 120. The overcurrent detecting circuit is configured to sample the level of the current flowing through the resistor 113 as a corresponding voltage level and to compare the sampled voltage level with a predetermined threshold level *Vth*, thereby detecting whether the overcurrent occurs.

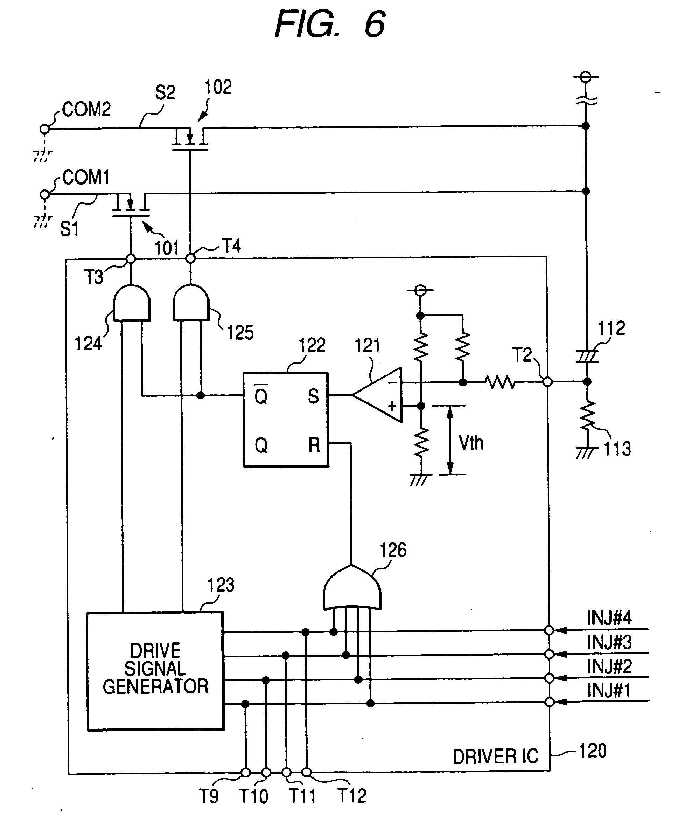

Specifically, as illustrated in Fig. 6, the overcurrent detecting circuit is provided with a comparator 121. The comparator 121 is configured to:
compare the level of the voltage across the resistor 113 with the threshold voltage level *Vth*;
output a logical low level when the threshold voltage level *Vth* is lower than the level of the voltage across the resistor 113; and
output a logical high level when the level of the voltage across the resistor 113 is lower than the threshold voltage level *Vth*.

The overcurrent detecting circuit is also provided with an RS flip-flop 122 having inputs *S* (Set) and *R* (Reset), the input S of which is connected to the output of the comparator 121. When the output of the comparator 121 is in the logical high level, the output *Q̅* (logically opposite of the output *Q*) of the flip-flop 122 is in a logical low level.

While the output of the comparator 121 is in the logical low level (threshold voltage level *Vth* is lower than the level of the voltage across the resistor 113), the output *Q̅* of the flip-flop 122 is in a logical high level.

Because the output *Q̅* of the flip-flop 122 is in a logical high level, the output of each of AND gates 124 and 125 is in a logical high level. This allows the drive signal (discharge control signal) with a predetermined voltage level, which is generated by a drive signal generator 123 to be fed to each of the AND gates 124 and 125, to be applied to the gate of each of the N-channel FETs 101 and 102. This causes the N-channel FETs to be in on state. The on state of each of the FETs 101 and 102 allows the discharged current from the capacitor 112 to flow through the common terminals *COM1* and *COM2*.

In contrast, when the level of the voltage across the resistor 113 is lower than the threshold voltage level *Vth* due to an occurrence of the overcurrent, the output of the comparator 121 turns to the logical high level. The logical low level of the comparator output permits the output *Q̅* of the flip-flop 122 to be in the logical low level.

The logical high level of the output *Q̅* of the flip-flop 122 turns the output of each of AND gates 124 and 125 to the logical low level. This causes the drive signal (discharge control signal) supplied from the drive signal generator 123 to be interrupted to the gate of each of the N-channel FETs 101 and 102. This causes the N-channel FETs 101 and 102 to turn to off state. The off state of each of the FETs 101 and 102 disables the flow of the discharged current from the capacitor 112 through the common terminals *COM1* and *COM2*. This makes it possible to prevent the overcurrent from flowing through the FETs 101 and 102.

Note that, in Fig. 6, as the drive instructions, drive pulses *INJ#1* to *INJ#4* are applied to the input *R* of the RS flip-flop 122 through an OR gate 126. Every time at least any one of the drive pulses *INJ#1* to *INJ#4* is applied to the OR gate 126, the RS flip-flop 122 is reset.

In such a diesel fuel injection system set forth above, an increase of the number of injections by the injectors 301 to 304 aims at improving the combustion performance of the diesel engine. An increase of the number of injections by the injectors 301 to 304 causes respective fuel injection periods by the injectors 301 to 304 to overlap. This causes both the FETs 101 and 102 to be turned on during a period (referred to as an overlap period hereinafter). During the overlap period, as clearly seen from Figs. 5 and 6, a current flows through the resistor 113 two times as much as that flowing therethrough during any one of the FETs 101 and 102 being turned on.

This may cause the overflow detecting circuit to erroneously detect, as an overcurrent, the current flowing through the resistor 113 during the overlap period even though the threshold voltage level Vth is determined to leave a predetermined level of headroom.

Setting the threshold voltage level *Vth* to be comparatively low so as to allow detection of a ground fault in the common terminal *COM1* or *COM2* during the overlap period may make it difficult to accurately detect a ground fault in the common terminal *COM1* or *COM2* while either the FET 101 or FET 102 is in on state. In addition to the problem, an increase of the threshold voltage level *Vth* may cause an increase of the load applied to the FETs 101 and 102. In this case, it may be considered to adopt FETs each with a large current capacity as the FETs 101 and 102. This, however, may unavoidably cause the circuit size of the inductive load driver and the cost thereof to increase.

### SUMMARY OF THE INVENTION

The present invention has been made on the background above.

Accordingly, it is an object of the present invention to provide an electric load driver, which is capable of sensibly detecting whether an overcurrent occurs without increasing the circuit size as well as to provide an overcurrent detecting device to be installed in such an electric load driver.

As to the electric load driver this object is solved by the measures indicated in claim 1 and as to the overcurrent detecting device this object is solved by the measures indicated in claim 7.

Further advantageous modifications of the present invention are subject matter of the dependent claims.

### BRIEF DESCRIPTION OF THE DRAWINGS

Other objects and aspects of the invention will become apparent from the following description of embodiments with reference to the accompanying drawings in which:
Fig. 1 is a circuit diagram schematically illustrating the circuit layout of an inductive load driver according to an embodiment;
Fig. 2 is a circuit diagram schematically illustrating the internal structure of a drive IC illustrated in Fig. 1 according to the embodiment;
Fig. 3 is a timing chart schematically illustrating an example of operations of the inductive load drive circuit in normal status according to the embodiment;
Fig. 4 is a timing chart schematically illustrating an example of operations of the inductive load drive circuit in an occurrence of an overcurrent according to the embodiment;
Fig. 5 is a circuit diagram schematically illustrating the circuit layout of an inductive load driver for driving injectors connected to a common rain in a diesel fuel system; and
Fig. 6 is a circuit diagram schematically illustrating the internal structure of a drive IC illustrated in Fig. 5.

### DETAILED DESCRIPTION OF AN EMBODIMENT OF THE INVENTION

An embodiment of the present invention will be described hereinafter with reference to the accompanying drawings.

In the embodiment, the present invention is applied to, for example, an inductive load driver for driving a solenoid of each injector installed in a four-cylinder diesel fuel injection system with a common rail (common pressure accumulator).

In the four-cylinder diesel fuel injection system with the common rail, when the diesel fuel injection system starts to operate, high-pressure fuel delivered from a high-pressure supply pump is accumulated in the common rail to which the injectors are connected. The accumulated high-pressure fuel is injected into combustion chambers of the four cylinders when the injectors are actuated to open.

Each of the injectors according to the embodiment is designed to a solenoid injector composed of a solenoid as an inductive load, and is opened and closed by the solenoid driven by an inductive load driver according to the embodiment.

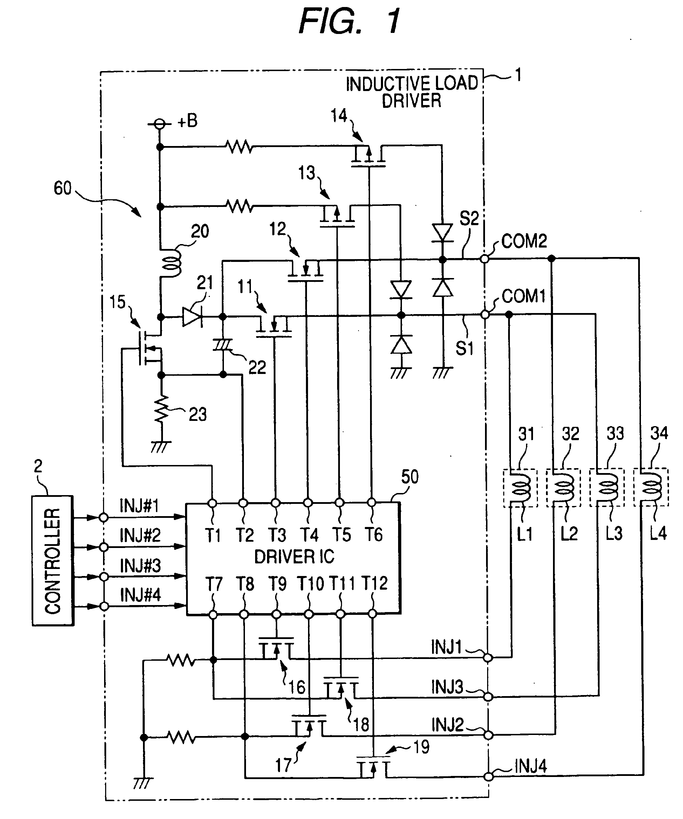

Fig. 1 illustrates the circuit layout of an inductive load driver 1 according to the embodiment.

As illustrated in Fig. 1, the inductive load driver 1 is operative to individually control drive of each of injectors 31 to 34 for injecting fuel into each of the four cylinders based on commands given from a controller 2. The controller 2 has substantially the same structure and functions of the controller 200 illustrated in Fig. 5. Specifically, the controller 2 is operative to generate drive instructions for each individual cylinder based on the input various parameters, thereby providing them to the inductive load driver 1.

Each of the injectors 31 to 34 is designed to, for example, a normally-closed solenoid value. For the sake of simplicity, solenoid coils *L1* to *L4* of the injectors 31 to 34 are only illustrated in Fig. 1. In addition, each of the injectors 31 to 34 is provided with, for example, a return spring, a valve disc, and an actuator. For example, the movable valve disc is located at an injection port closing position by biasing force applied from the return spring. When the solenoid coil is energized, the actuator is driven to move the valve disc to an injection port opening position from the injection closing position. This allows the injector to inject fuel through the injection port.

When power distribution to the solenoid coil is interrupted, the actuator is driven to move the valve disc to the injection port closing position from the opening position, resulting that the fuel injection is stopped.

In addition, the inductive load driver 1 is provided with signal common terminals *COM1* and *COM2,* and other terminals *INJ1, INJ2, INJ3,* and *INJ4.* To the signal common terminal *COM1,* one end of each of the coils *L1* and *L3* is connected, and to the signal common terminal *CM2*, one end of each of the coils *L2* and *L4* is connected. The other ends of the coils *L1, L2, L3*, and *L4* are connected to terminals *INJ1, INJ2, INJ3,* and *INJ4* of the driver 1, respectively.

The inductive load driver 1 is also provided with a driver IC 50 into which the driving instructions provided from the controller 2 are input The driver 1 is also provided with FETs 11 to 19 as switching elements. The driver IC 50 has terminals T1 to T12, and the gates (control terminals) of the FETs 11 to 19 are connected to the driver IC 50 through the terminals *T3*, *T4, T5, T6, T1, T9, T10, T11,* and *T12*, respectively. The driver IC 50 is operative to control to individually turn the FETs 11 to 19 on and off.

The driver 1 is provided with a DC to DC converter 60 composed of the FET 15, a step-up coil 20, a diode 21, and a capacitor 22. A battery (+*B*) is connected to one end of the step-up coil 20, the other end of the step-up coil 20 is connected to the drain of the FET 15 and the anode of the diode 21. The cathode of the diode 21 is connected to one electrode of the capacitor 22, the drain of the FET 11, and the drain of the FET 12. The sources of the FETs 11 and 12 are connected to the common terminals *COM1* and *COM2* through power supply lines *S1* and *S2* so that the FETs 11 and 12 are located in the power supply lines *S1* and *S2*.

The drains of the FETs 13 and 14 are connected to the power supply lines *S1* and *S2*, and the sources thereof are connected to the battery (+*B*) in parallel to the FETs 11 and 12. The FETs 13 and 14 allow open or close of the lines between the battery (+*B*) and the power supply lines *S1* and *S2*.

The sources of the FETs 16 to 19 are connected to the ground, and the drains thereof are connected to the terminals *INJ1* to *INJ4*, respectively. The sources of the FETs 16 and 18 are also connected to the terminal *T7* of the driver IC 50, and the sources of the FETs 17 and 19 are connected to the terminal *T8* thereof.

In addition, the driver 1 is provided with a resistor 23, one end of which is connected to the source of the FET 15. The terminal *T2* of the driver IC 50 is connected to the other electrode of the capacitor 22 and the connection point between the source of the FET 15 and the one end of the resistor 23. The other end of the resistor 23 is grounded.

The FETs 11 and 12 allow open or close of the power supply lines *S1* and *S2*, respectively.

When a voltage is applied from the battery (+*B*) to the step-up coil 20, the coil 20 is charged. When the FET 15 is turned off, the boosted voltage based on the battery voltage and the charged energy of the coil 20 charges the capacitor 22, and when the FET 15 is turned on, the charged voltage in the capacitor 22 is discharged. The discharge current is applied through the common terminals *COM1* and *COM2*.

The FET 15 is controlled to be turned on of off based on the magnitude of the discharged current fetched from the capacitor 22 through the terminal *T2* of the driver IC 50.

The FETs 13 and 14 are operative to carry out constant current drive of the coils *L1* to *L4* after the initial drive.

Specifically, the FETs 13 and 14 are connected to the power supply lines *S1* and *S2* and to the battery (+*B*) in parallel to the FETs 11 and 12 so that they allow open or close of the lines between the battery and the power supply lines *S1* and *S2*. When the FETs 13 and 14 are turned on, the constant currents (emitter currents) are supplied through the power supply lines *S1* and *S2* to the common terminals CO 1 and CO2, respectively.

The driver IC 50 is operative to generate drive signals to apply them so as to individually turn on or off of the FETs 101 to 104.

The FETs 16 to 19 are connected between the ground and the terminals *INJ1* to *INJ4* connected to the other ends of the coils *L1* to *L4* so that they individually allow open or close the lines between the ground and the terminals *INJ1* to *INJ4*. Specifically, the driver IC 50 controls to selectively turn the FETs 16 to 19 on or off in synchronization with applying the drive signals to the FETs 11 to 15. This makes it possible to selectively provide conductive paths between the DC to DC converter 60 and the ground through the coils *L1* to *L4,* or between each of the emitters of the FETs 13 and 14 and the ground through the coils *L1* to *L4*.

In other words, selectively turning on or off of the FETs 16 to 19 in synchronization with the selective apply of the drive signals to the FETs 11 to 15 allows the coils *L1* to *L4* to be selectively brought into conduction based on the discharged currents through the power supply lines *S1* and *S2* or the constant currents (emitter currents) therethrough.

In addition, the driver IC 50 is provided with an overcurrent detecting circuit 50a for detecting whether overcurrent occurs based on the level of a current flowing through the resistor 23.

Specifically, the overcurrent detecting circuit 50a is provided with a comparator 51 with an inverting input and a noninverting input, the inverting input of which is connected to the terminal *T2*.

The overcurrent detecting circuit 50a is also provided with an RS flip-flop 52 having inputs *S* (Set) and *R* (Reset), the input *S* of which is connected to the output of the comparator 51.

The overcurrent detecting circuit 50a is further provided with AND gates 54 and 55, a drive signal generator 53, an OR gate 56, an AND gate 57, an NPN transistor 58, and resistors 59a, 59b, and 59c.

One input of each of the AND gates 54 and 55 is connected to the output of the RS flip-flop 52. The other inputs of the AND gates 54 and 55 are connected to the drive signal generator 53 through drive signal supply lines *S3* and *S4,* respectively. The outputs of the AND gates 54 and 55 are connected to the gates of the FETs 11 and 12 through the terminals *T3* and *T4*. The drive signal generator 53 is operative to generate drive signals (discharge control signals) each with a predetermined voltage level for driving the FETs 11 and 12, and to apply them to the AND gates 54 and 55 through the drive signal supply lines *S3* and *S4*, respectively.

When the output of the RS flip-flop 52 is a logical high level and the drive signal is supplied to the AND gate 54 from the drive signal generator 53, the AND gate 54 outputs a logical high level. The logical high level allows the FET 11 to turn on. Similarly, when the output of the RS flip-flop 52 is the logical high level and the drive signal is supplied to the AND gate 55 from the drive signal generator 53, the AND gate 55 outputs a logical high level. The logical high level allows the FET 12 to turn on.

The OR gate 56 allows drive pulses *INJ#1* to *INJ#4*, which are given from the controller 2 as the drive instructions, to be applied to the input R of the RS flip-flop 52. Every time at least any one of the drive pulses *INJ#1* to *INJ#4* is therefore applied to the OR gate 56, the RS flip-flop 52 is reset.

The AND gate 57 has inputs connected to the drive signal supply lines *S3* and *S4*, respectively. The output of the AND gate 57 is connected to the base of the NPN transistor 58. The emitter of the NPN transistor 58 is grounded, and the collector thereof is connected to one end of the resistor 59b. One end of the resistor 59a is grounded. The other ends of the resistor 59a and 59b are commonly connected to the noninverting terminal of the comparator 51 in parallel. In addition, one end of the resistor 59c is connected to the noninverting terminal of the comparator 51 so that the resistors 59a and 59c are connected in series, and to the other end of the resistor 59c, a predetermined DC voltage *Vd* is applied.

Specifically, when the NPN transistor 58 is in off state, in other words, when the periods for supplying the drive signals to the FETs 11 and 12 are eliminated to overlap with each other in time, the voltage-division ratio of the resistors 59a and 59c based on the DC voltage *Vd* determines, as the threshold voltage level applied to the noninverting terminal of the comparator 51, a first threshold voltage level *Vth1*.

In contrast, when the NPN transistor 58 is in on state, in other words, when the periods for supplying the drive signals to the FETs 11 and 12 overlap with each other in time, the voltage-division ratio of the resistor 59c and the parallel circuit of the resistors 59a and 59b based on the DC voltage *Vd* determines, as the threshold voltage level applied to the noninverting terminal of the comparator 51, a second threshold voltage level *Vth2*.

That is, the AND gate 57, the NPN transistor 58, and the resistor 59b allow the threshold voltage level Vth to be changed based on whether the on periods of the FETs 11 and 12 overlap with each other in time.

As described above, in the embodiment, when the on periods of the FETs 11 and 12 are eliminated to overlap with each other in time, the first threshold voltage *Vth1* is set as the threshold voltage level applied to the noninverting terminal of the comparator 51. In contrast, when the on periods of the FETs 11 and 12 overlap with each other in time, the second threshold voltage *Vth2,* which is smaller than the first threshold voltage *Vth1*, is set as the threshold voltage level applied to the noninverting terminal of the comparator 51.

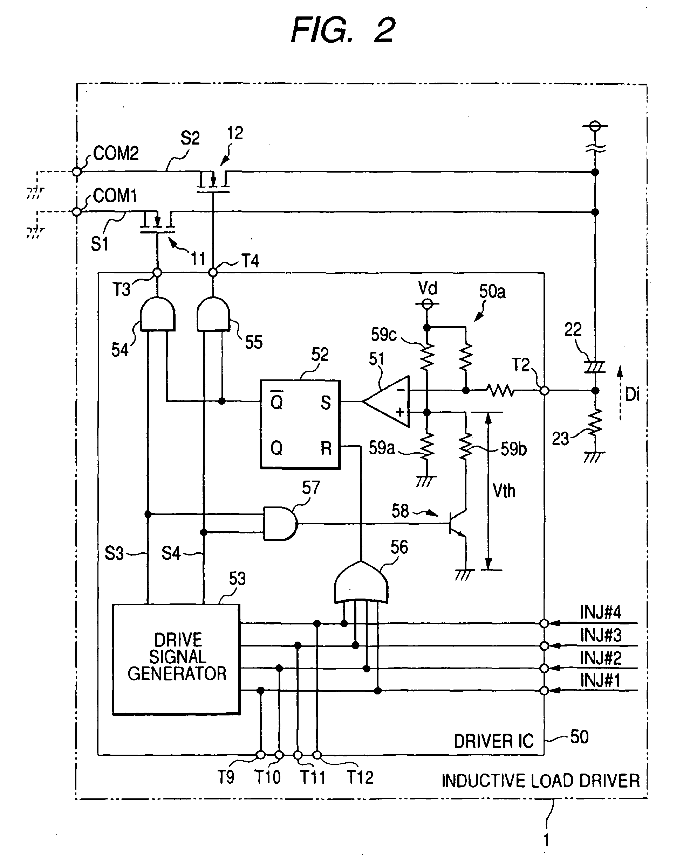

Note that, when either the FET 11 or 12 is turned on, a negative discharge current *Di* whose current direction is illustrated by the arrow in Fig. 2 flows through the resistor 23 depending on the discharge of the capacitor 22.

When the on periods of the FETs 11 and 12 overlap with each other in time, a negative discharge current *Di1* whose magnitude is the double of that of the negative discharge current *Di* flows through the resistor 23 depending on the discharge of the capacitor 22.

In the embodiment, therefore, when the on periods of the FETs 11 and 12 are eliminated to overlap with each other in time, the first threshold voltage level *Vth1* is set to be lower than a first level of voltage across the resistor 23 in normal status and higher than a second level of voltage across the resistor 23 when a ground fault occurs in at least one of the common terminals *COM 1* and *COM2*.

In contrast, when the on periods of the FETs 11 and 12 overlap with each other in time, the second threshold voltage level *Vth2* is set to be lower than a third level of voltage across the resistor 23 in normal status and higher than a fourth level of voltage across the resistor 23 when a ground fault occurs in at least one of the common terminals *COM 1* and *COM2.*

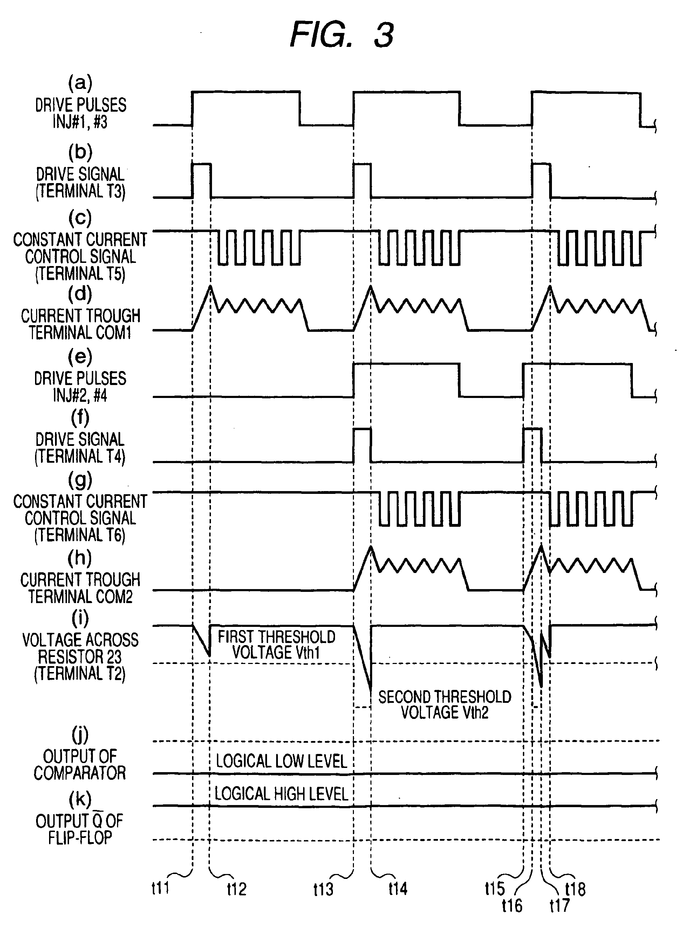

Figs. 3 and 4 illustrates an example of operations of the driver IC 50 of the driver 1 when the drive pulses *INJ#1* to *INJ#4* are input thereto as timing charts. Overall operations of the driver 1 will be described hereinafter with reference to Figs. 3 and 4.

Note that Fig. 3 illustrates the operations of the driver IC 50 in normal status, in other words, in a status in which no overcurrent flows through the resistor 23 due to an occurrence of a ground fault in the common terminal *COM1* or *COM2.* In contrast, Fig. 4 illustrates the operations of the driver IC2 in abnormal status, in other words, in a status in which an overcurrent flows through the resistor 23 due to an occurrence of the ground fault in the common terminal *COM1* or *COM2.*

### OPERATIONS IN NORMAL STATUS

As illustrated in the reference character (a) in Fig. 3, the drive pulses *INJ#1* and *INJ#3* each with a logical high level are input to the driver IC 50 from the controller 2 at the timing *t11*. The drive signal generator 53 applies the drive signal (discharge control signal) for the FET 11 to the AND gate 54 in synchronization with the rising edge of each of the drive pulses *INJ#1* and *INJ#3* during a period from the *t11* to the *t12*.

On the other hand, because no drive pulses *INJ#2* and *INJ#4* each with a logical high level are input to the driver IC 50 during the period from the timing *t11* to the timing *t12*, the NPN transistor 58 is kept off state. This causes the threshold voltage applied to the noninverting terminal of the comparator 51 to be set to the first threshold voltage *Vth1*. Because no overcurrent flows through the resistor 23 so that the threshold voltage level *Vth1* is lower than the level of the voltage across the resistor 23 (see the reference character (i) in Fig. 3), the comparator 51 outputs a logical low level (see the reference character (j) in Fig. 3).

While the output of the comparator 51 is in the logical low level, the output *Q̅* of the flip-flop 52 is in a logical high level (see the reference character (k) Fig. 3). When the output *Q̅* of the flip-flop 52 is in the logical high level, the output of each of the AND gates 54 and 55 is in the logical high level.

This allows the AND gate 54 to pass the drive signal for the FET 11 therethrough so that the drive signal is applied to the gate of the N-channel FET 11. This causes the N-channel FET 11 to be in on state. The on state of the EET 11 allows the discharged current from the capacitor 22 to abruptly flow through the common terminals *COM1* and *COM2* in the waveform illustrated in the reference character (d) Fig. 3.

When the drive signal is turned to a logical high level at the timing *t12,* the FET 11 is turned off. This causes the current flowing through the common terminal *CO1* to shift to decrease (see the reference character (d) Fig. 3). Thereafter, a constant current control signal is applied from the terminal *T5* of the driver 1 to the gate of the FET 13 so that the coils *L1* and *L3* (see Fig. 1) are driven based on the constant currents, respectively. In other words, the coils *L1* and *L3* are controlled based on average currents in accordance with pulse-width control. The waveform of the current flowing through the common terminal *COM1* is illustrated in Fig. 3 designated by the reference character (d) therein.

In order to overlap respective fuel injection periods by the injectors 31 to 34, in addition to the drive pulses *INJ#1* and *INJ#3*, the drive pulses *INJ#2* and *INJ#4* each with a logical high level are input to the driver IC 50 from the controller 2 at the timing *t13* (see the reference characters (a) and (e) in Fig. 3). The drive signal generator 53 applies the drive signals (discharge control signals) for the FET 11 and the FET 12 to the AND gates 54 and 55 in synchronization with the rising edges of each drive pulse *INJ#1, INJ#3* and each drive pulse *INJ#2, INJ#4* during a period from the *t13* to the *t14*, respectively.

In this *"overlap"* case, as set forth above, the negative discharge current *Di1* whose magnitude is the double of that of the negative discharge current *Di* flows through the resistor 23 depending on the discharge of the capacitor 22.

In the first embodiment, in order to meet the decrease in the voltage across the resistor 23, because the drive pulses *INJ#2* and *INJ#4* each with the logical high level are input to the driver IC 50 during the period from the timing *t13* to the timing *t14*, the NPN transistor 58 is automatically turned to on state. This causes the threshold voltage applied to the noninverting terminal of the comparator 51 to be set to the second threshold voltage *Vth2,* which is lower than the first threshold voltage *Vth1*, so as to meet the drop in the voltage across the resistor 23.

Because no overcurrent flows through the resistor 23 so that the threshold voltage level *Vth2* is lower than the level of the voltage across the resistor 23 (see the reference character (i) in Fig. 3), the comparator 51 outputs the logical low level (see the reference character (j) in Fig. 3).

While the output of the comparator 51 is in the logical low level, the output *Q̅* of the flip-flop 52 is in the logical high level (see the reference character (k) Fig. 3). When the output *Q̅* of the flip-flop 52 is in the logical high level, the output of each of the AND gates 54 and 55 is in the logical high level.

This allows the AND gates 54 and 55 to pass the drive signals for the FETs 11 and 12 therethrough so that the drive signals are applied to the gates of the N-channel FETs 11 and 12. This causes the N-channel FETs 11 and 12 to be in on state. The on state of each of the EETs 11 and 12 allows the discharged current from the capacitor 22 to abruptly flow through the common terminals *COM1* and *COM2* in the waveform illustrated in the reference character (d) Fig. 3.

In this *"overlap"* case, as described above, when each of the drive signals is turned to the logical high level at the timing *t14,* the FETs 11 and 12 are turned off. This causes the current flowing through each of the common terminals *CO1* and *CO2* to shift to decrease (see the reference character (d) Fig. 3). Thereafter, as set forth above, constant current control signals are applied from the terminals *T5* and *T6* of the driver 1 to the gates of the FETs 13 and 14 so that the coils *L1* to *L4* (see Fig. 1) are driven based on the constant currents, respectively. In other words, the coils *L1* to *L4* are controlled based on average currents in accordance with pulse-width control. The waveform of the current flowing through the common terminals *COM1* and *COM2* are illustrated in Fig. 3 designated by the reference characters (d) and (h) therein.

In addition, as illustrated as the timings *t15* and *t16*, when the drive signals (discharge control signals) for the FETs 11 and 12 applied from the drive signal generator 53 temporally overlap with each other, the operations, which are basically identical with the operations set forth above are carried out.

Specifically, the drive pulses *INJ#2* and *INJ#4* each with the logical high level are input to the driver IC 50 from the controller 2 at the timing *t15*, and thereafter, the drive pulses *INJ#1* and *INJ#3* each with the logical high level are input to the driver IC 50 from the controller 2 at the timing *t16.*

The discharge control signal for the FET 12 with the logical high level is applied to the AND gate 55 from the drive signal generator 53 during a period from the timing *t15* to the timing *t17* (see the reference character (f) in Fig. 3). Similarly, the discharge control signal for the FET 11 with the logical high level is applied to the AND gate 54 from the drive signal generator 53 during a period from the timing *t16* to the timing *t18* (see the reference character (b) in Fig. 3).

Therefore, because the discharge control signals for the FETs 11 and 12 are in the logical high level during the overlap period from the timing *t16* to the timing *t17*, the NPN transistor 58 is in on state during the overlap period. This causes the threshold voltage applied to the noninverting terminal of the comparator 51 to be set to the second threshold voltage *Vth2* during the overlap period, which is lower than the first threshold voltage *Vth1*, so as to meet the drop in the voltage across the resistor 23.

Accordingly, it is possible to determine whether an overcurrent occurs by using the threshold voltage *Vth2* meeting the drop in the voltage across the resistor 23 during the overlap period.

### OPERATIONS IN OCCURRENCE OF OVERCURRENT

### DUE TO GROUND FAULT IN COMMON TERMINAL COM1

As illustrated in the reference character (a) in Fig. 4, the drive pulses *INJ#1* and *INJ#3* each with the logical high level are input to the driver IC 50 from the controller 2 at the timing *t21* when a ground fault occurs in the common terminal *COM1*.

The drive signal generator 53 applies the drive signal (discharge control signal) for the FET 11 to the AND gate 54 in synchronization with the rising edge of each of the drive pulses *INJ#1* and *INJ#3* during a period from the *t21* to the *t22*.

On the other hand, because no drive pulses *INJ#2* and *INJ#4* each with the logical high level are input to the driver IC 50 during the period from the timing *t21* to the timing *t22,* the NPN transistor 58 is kept off state. This causes the threshold voltage applied to the noninverting terminal of the comparator 51 to be set to the first threshold voltage *Vth1*.

Because an overcurrent flows through the resistor 23 so that the voltage across the resistor 23 abruptly changes in the negative direction (see the reference character (i) in Fig. 4), the voltage across the resistor 23 decreases to be lower than the first threshold voltage *Vth1* at the timing t22 (see the reference character (i) in Fig. 4). This causes the output of the comparator 51 to turn to a logical high level (see the reference character (j) in Fig. 4).

The reverse of the logical level of the comparator's output from the logical low level to the logical high level causes the output *Q̅* of the flip-flop 52 to turn from the logical high level to a logical low level (see the reference character (k) Fig. 4). When the output *Q̅* of the flip-flop 52 is in the logical low level, the output of each of the AND gates 54 and 55 is in the logical low level.

This prevents the drive signal for the FET 11 from passing through the AND gate 54, preventing the drive signal from being applied to the gate of the N-channel FET 11 at the timing *t22* (see the reference character (b) in Fig. 4). This forcibly turns the FET 11 off, making it possible to prevent the overcurrent from flowing through the FET 11.

Note that, in this case, because a ground fault occurs in the common terminal *COM1*, a ground-fault current flows through the common terminal *COM1* in the constant current drive, but in Fig. 4, the illustration of which is omitted. In the constant current drive, detecting the overcurrent corresponding thereto and stopping the drive of the FET 13 can prevent the overcurrent from flowing through the coils *L1* and *L3* (see the reference characters (c) and (d) in Fig. 4). Note that, as illustrated by the reference characters (a) and (e) in Fig. 4, when new drive pulses *INJ#1* and *INJ#3* of *INJ#2* and *INJ#4* each with the logical high level are input to the driver IC 50 from the controller 2 at the timing *t23*, the flip-flop 52 is reset by the output of the OR gate 56. That is, the drive signals (discharge control signals) are permitted to be applied to the gates of the FETs 11 and 12 through the AND gate 54 and 55.

In order to overlap respective fuel injection periods by the injectors 31 to 34 when a ground fault occurs in the common terminal *COM1,* in addition to the drive pulses *INJ#1* and *INJ#3*, the drive pulses *INJ#1* and *INJ#3* each with the logical high level are input to the driver IC 50 from the controller 2 at the timing *t23* (see the reference characters (a) and (e) in Fig. 3).

The drive signal generator 53 applies the drive signals (discharge control signals) for the FET 11 and the FET 12 to the AND gates 54 and 55 in synchronization with the rising edges of each drive pulse *INJ#1, INJ#3* and each drive pulse *INJ#2, INJ#4* during a period from the *t23* to the *t24*, respectively.

In this *"overlap"* case, as set forth above, in order to meet the decrease in the voltage across the resistor 23, because the drive pulses *INJ#2* and *INJ#4* each with the logical high level are input to the driver IC 50 during the period from the timing *t23* to the timing *t24,* the NPN transistor 58 is automatically turned to on state. This causes the threshold voltage applied to the noninverting terminal of the comparator S1 to be set to the second threshold voltage *Vth2*, which is lower than the first threshold voltage *Vth1*, so as to meet the drop in the voltage across the resistor 23.

Because an overcurrent flows through the resistor 23 so that the voltage across the resistor 23 abruptly changes in the negative direction (see the reference character (i) in Fig. 4), the voltage across the resistor 23 decreases to be lower than the second threshold voltage *Vth2* at the timing t24 (see the reference character (i) in Fig. 4). This causes the output of the comparator 51 to turn to the logical high level (see the reference character (j) in Fig. 4).

The change of the logical level of the comparator's output from the logical low level to the logical high level causes the output *Q̅* of the flip-flop 52 to turn from the logical high level to the logical low level (see the reference character (k) Fig. 4). When the output *Q̅* of the flip-flop 52 is in the logical low level, the output of each of the AND gates 54 and 55 is in the logical low level.

This prevents the drive signals for the FETs 11 and 12 from passing through the AND gates 54 and 55, preventing the drive signals from being applied to the gates of the N-channel FETs 11 and 12 at the timing *t24* (see the reference character (b) in Fig. 4). This forcibly turns the FETs 11 and 12 off, making it possible to prevent the overcurrent from flowing through each of the FETs 11 and 12.

In addition, as illustrated as the timings *t25* and *t26,* when the drive signals for the FETs 11 and 12 applied from the drive signal generator 53 temporally overlap with each other during very short period even if a ground fault occurs in the common terminal *COM1,* the voltage across the resistor 23 is not lower than the second threshold voltage level *Vth2.*

In this case, however, as illustrated by the reference character (i) in Fig. 4 as the behavior of the level of the voltage across the resistor 23, after the threshold voltage is changed to the first threshold voltage *Vth1* at the timing *t27*, the transitional discharged current illustrated by the reference character (d) in Fig. 4 reduces the voltage across the resistor 23 to be lower than the first threshold voltage *Vth1*. This allows an overcurrent due to a ground fault in the common terminal *CO1* to be securely detected. Note that, if the overlap period between the drive signals for the FETs 11 and 12 is long, because the voltage across the resistor 23 during the overlap period decreases to be lower than the second threshold voltage *Vth2*, it is possible to detect an occurrence of the overcurrent in a similar manner at the timing *t24*.

The operations of the driver 1 set forth above when a ground fault occurs in the common terminal *COM1* are similarly carried out in a case where a ground fault occurs in the common terminal *COM2*.

As described above, the inductive load driver 1 with the overcurrent detecting circuit 50a according to the embodiment can achieve the following effects.

It is possible to appropriately determine whether an occurrence of an overcurrent or nonoccurrence thereof even when the drive signals for the FETs 11 and 12 overlap with each other in time or are eliminated to overlap with each other in time. This appropriate detection of whether an occurrence of an overcurrent or nonoccurrence thereof allows securely protection of the FETs 11 and 12, making it possible to eliminate the need of adopting switching elements with large current capacity as the FETs 11 and 12. This can avoid an increase of the circuit size of the driver 1 and the cost thereof.

More specifically, a detection of an overcurrent due to a ground fault in at least one of the common terminals *CO1* and *CO2* allows the AND gates 124 and 125 to prevent the discharge control signals from being applied to the gates of the FETs 11 and 12. This avoids that a high current based on the overcurrent will flow through the FETs 11 and 12, making it possible to securely protect the FETs 11 and 12.

Furthermore, it is possible to change the threshold voltage from the first threshold voltage *Vth1* to the second threshold voltage *Vth2* during a period synchronized with a period for which the level of the voltage across the resistor 23 has increased. This allows an occurrence of an overcurrent and nonoccurrence thereof to be precisely detected.

The power supply circuit is not limited to the DC to DC converter, which supplies, through the common terminals *COM1* and *COM2*, the discharged current from the capacitor 22 in which the boosted voltage is charged. Specifically, the inductive load driver according to the embodiment can adopt one of power supply circuits with various structures for supplying power through the common terminals *COM1* and *COM2.*

The overcurrent detecting circuit is not limited to the structure, which allows the flip-flop 52 to latch the set value. Specifically, an overcurrent detecting circuit with a structure for latching (holding) the logical state of the output of a comparator can be used.

In the embodiment, the logical AND operation between the drive signal for the FET 11 and that for the FET 12 determines whether the on period of the FET 11 and that of the FET 12 overlap with each other, thereby changing the threshold voltage level based on the determined result. The present invention is not limited to the structure. Specifically, various means for detecting whether the on period of the FET 11 and that of the FET 12 overlap with each other and various means for changing the threshold voltage level to be compared with the level of the voltage across the resistor 23 based on the detected result can be used.

In the embodiment, the present invention is applied to an inductive load driver for driving a solenoid of each injector installed in a four-cylinder diesel fuel injection system with a common rail, but the present invention can be applied to various drivers for driving various electrical loads. Specifically, the present invention can be applied to circuits each having:
a plurality of common terminals to which a plurality of electrical loads are connected and to which power is supplied;
a plurality of switching elements provided in the plurality of common terminals, respectively; and
an impedance element to which the supplied power is fetched to be applied .

In addition, the circuits each includes:
means (circuitry) configured to compare a level of the power across the impedance element with a predetermined threshold level of power when at least one of the switching elements is in on state and to determine whether an overcurrent occurs based on the compared result.

## Claims

1. An electrical load driver comprising:
a plurality of common terminals (COM1, COM2) to which a plurality of electrical loads (L1 to L4) are connected and to which power is supplied;
a plurality of switching elements (11 to 14) provided in the plurality of common terminals (COM1, COM2), connecting the power supply circuit and the common terminals (COM1, COM2) and configured to be switched on or off, respectively;
an impedance element (23) to which the supplied power is fetched to be applied;
a first unit configured to compare a level of the power across the impedance element (23) with a predetermined threshold level of power when at least one of the switching elements (11 to 14) is in the on-state, and to determine whether an overcurrent occurs based on the compared result; and
a second unit configured to change the predetermined threshold level based on whether on-periods of the plurality of switching elements (11 to 14) overlap with each other.

2. An electrical load driver according to claim 1, **characterized in that** the plurality of electrical loads are inductive loads (L1 to L4), and the impedance element is a resistor (23).

3. An electrical load driver according to claim 1 or 2, **characterized in that** the second unit is configured to:
logically AND a plurality of signals indicative of the on-periods of the plurality of switching elements (11 to 14), respectively; and
determine whether to change the predetermined threshold level based on the result of the logical AND.

4. An electrical load driver according to any one of claims 1 to 3, **characterized in that**
the first unit comprises:
a comparator (51) configured to compare the level of the power across the impedance element (23) with the changed threshold level of power; and
a flip-flop (52) configured to latch a state of an output of the comparator (51) when it is determined that the level of the power across the impedance element (23) is higher than the changed threshold level, and
the second unit comprises:
a third unit configured to prevent the plurality of switching elements (11 to 14) from being switched on while the state of the output of the comparator (52) is latched by the flip-flop (51).

5. An electrical load driver according to any one of claims 1 to 4, **characterized by** a power supply circuit provided with a charged capacitor (22) and configured to supply, to the common terminals (COM1, COM2), a current discharged from the capacitor (22) as the power, wherein each of the plurality of switching elements (11 to 14) is switched on or off to cause the discharged current to flow through each of the common terminals (COM1, COM2) or to be shut off therethrough.

6. An electrical load driver according to claim 5, **characterized in that** the plurality of electrical loads are solenoid coils (L1 to L4) installed in injectors (31 to 34) and configured to open and close the injectors (31 to 34), respectively, the injectors (31 to 34) being connected to a common pressure accumulator of a diesel engine, and comprising:
a fourth unit configured to supply a current through the plurality of common terminals (COM1, COM2) to the solenoid coils (L1 to L4) during corresponding periods after the current discharged from the capacitor (22) is supplied through the plurality of common terminals (COM1, COM2) to the solenoid coils (L1 to L4).

## Patentansprüche

1. Elektrischer Lasttreiber, der aufweist:
mehrere gemeinsame Anschlüsse (COM1, COM2), mit denen mehrere elektrische Lasten (L1 bis L4) verbunden sind und denen Energie zugeführt wird;
mehrere Schaltelemente (11 bis 14), die in den gemeinsamen Anschlüssen (COM1, COM2) vorgesehen sind, die Energieversorgungsschaltung und die gemeinsamen Anschlüsse (COM1, COM2) verbinden und ausgelegt sind, jeweils ein- oder ausgeschaltet zu werden;
ein Impedanzelement (23), zu dem die anzulegende zugeführte Energie geholt wird;
eine erste Einheit, die ausgelegt ist, einen Pegel der Energie über dem Impedanzelement (23) mit einem vorbestimmten Schwellenpegel einer Energie zu vergleichen, wenn sich mindestens eines der Schaltelemente (11 bis 14) in dem Ein-Zustand befindet, und auf der Grundlage des Vergleichsergebnisses zu bestimmen, ob ein Überstrom auftritt; und
eine zweite Einheit, die ausgelegt ist, den vorbestimmten Schwellenpegel in Abhängigkeit davon, ob Ein-Perioden der Schaltelemente (11 bis 14) einander überlappen, zu ändern.

2. Elektrischer Lasttreiber nach Anspruch 1, **dadurch gekennzeichnet, dass** die elektrischen Lasten induktive Lasten (L1 bis L4) sind und das Impedanzelement ein Widerstand (23) ist.

3. Elektrischer Lasttreiber nach Anspruch 1 oder 2, **dadurch gekennzeichnet, dass** die zweite Einheit ausgelegt ist:
mehrere Signale, die jeweils die Ein-Perioden der Schaltelemente (11 bis 14) angeben, einer logischen UND-Operation zu unterziehen;
auf der Grundlage des Ergebnisses der logischen UND-Operation zu bestimmen, ob der vorbestimmte Schwellenpegel zu ändern ist.

4. Elektrischer Lasttreiber nach einem der Ansprüche 1 bis 3, **dadurch gekennzeichnet, dass**
die erste Einheit aufweist:
einen Vergleicher (51), der ausgelegt ist, den Pegel der Energie über dem Impedanzelement (23) mit dem geänderten Schwellenpegel der Energie zu vergleichen; und
ein Flip-Flop (52), das ausgelegt ist, einen Zustand eines Ausgangs des Vergleichers (51) aufzufangen, wenn bestimmt wird, dass der Pegel der Energie über dem Impedanzelement (23) größer als der geänderte Schwellenpegel ist, und
die zweite Einheit aufweist:
eine dritte Einheit, die ausgelegt ist, zu verhindern, dass die Schaltelemente (11 bis 14) eingeschaltet werden, während der Zustand der Ausgabe des Vergleichers (52) durch das Flip-Flop (51) aufgefangen wird.

5. Elektrischer Lasttreiber nach einem der Ansprüche 1 bis 4, **gekennzeichnet durch** eine Energieversorgungsschaltung, die mit einem geladenen Kondensator (22) versehen und ausgelegt ist, den gemeinsamen Anschlüssen (COM1, COM2) einen Strom, der von dem Kondensator (22) entladen wird, als die Energie zuzuführen, wobei jedes der Schaltelemente (11 bis 14) ein- oder ausgeschaltet wird, um zu bewirken, dass der entladene Strom **durch** jeden der gemeinsamen Anschlüsse (COM1, COM2) fließt oder nicht fließt.

6. Elektrischer Lasttreiber nach Anspruch 5, **dadurch gekennzeichnet, dass** die elektrischen Lasten Solenoid-Spulen (L1 bis L4) sind, die in Einspritzern (31 bis 34) installiert und ausgelegt sind, die Einspritzer (31 bis 34) jeweils zu öffnen und zu schließen, wobei die Einspritzer (31 bis 34) mit einem gemeinsamen Druckakkumulator eines Dieselmotors verbunden sind, und dass er aufweist:
eine vierte Einheit, die ausgelegt ist, den Solenoid-Spulen (L1 bis L4) während entsprechender Perioden einen Strom durch die gemeinsamen Anschlüsse (COM1, COM2) zuzuführen, nachdem der Strom, der von dem Kondensator (22) entladen wird, durch die gemeinsamen Anschlüsse (COM1, COM2) den Solenoid-Spulen (L1-L4) zugeführt wird.

## Revendications

1. Dispositif de commande de charges électriques comprenant:
une pluralité de bornes communes (COM1, COM2) auxquelles de nombreuses charges électriques (L1 à L4) sont connectées et auxquelles on fournit une alimentation en puissance;
une pluralité d'éléments de commutation (11 à 14) pourvus dans la pluralité de bornes communes (COM1, COM2) connectant le circuit d'alimentation en puissance et les bornes communes (COM1, COM2) et, configurés de manière à être activés ou désactivés, respectivement;
un élément d'impédance (23) auquel on cherche à appliquer la puissance fournie;
une première unité configurée pour comparer un niveau de la puissance à travers l'élément d'impédance (23) à un niveau de puissance seuil prédéterminé lorsqu'au moins l'un des éléments de commutation (11 à 14) se trouve à l'état activé, et à déterminer si une surintensité se produit sur la base du résultat de la comparaison; et
une deuxième unité configurée pour modifier le niveau seuil prédéterminé selon que les périodes d'activation de la pluralité d'éléments de commutation (11 à 14) se chevauchent.

2. Dispositif de commande de charges électriques selon la revendication 1, **caractérisé en ce que** les nombreuses charges électriques sont des charges inductives (L1 à L4), et l'élément d'impédance est un résistor (23).

3. Dispositif de commande de charges électriques selon la revendication 1 ou 2, **caractérisé en ce que** la deuxième unité est configurée pour:
exécuter une logique ET sur plusieurs signaux qui indiquent les périodes d'activation de la pluralité d'éléments de commutation (11 à 14), respectivement; et
déterminer si l'on faut modifier le niveau seuil prédéterminé sur la base du résultat de la logique ET.

4. Dispositif de commande de charges électriques selon l'une quelconque des revendications 1 à 3, **caractérisé en ce que**
la première unité comprend:
un comparateur (51) configuré pour comparer le niveau de la puissance à travers l'élément d'impédance (23) au niveau seuil modifié de la puissance; et
une bascule (52) configurée pour verrouiller un état d'une sortie du comparateur (51) lorsque l'on détermine que le niveau de la puissance à travers l'élément d'impédance (23) est supérieur au niveau seuil modifié, et
la deuxième unité comprend:
une troisième unité configurée pour empêcher que la pluralité d'éléments de commutation (11 à 14) ne soient activés alors que l'état de la sortie du comparateur (52) est verrouillé par la bascule (51).

5. Dispositif de commande de charges électriques selon l'une quelconque des revendications 1 à 4, **caractérisé par** un circuit d'alimentation en puissance doté d'un condensateur chargé (22) et configuré pour alimenter, aux bornes communes (COM1, COM2), un courant déchargé depuis le condensateur (22) comme étant l'alimentation en puissance, où chacun de la pluralité d'éléments de commutation (11 à 14) est activé ou désactivé pour amener le courant déchargé à circuler à travers chacune des bornes communes (COM1, COM2) ou à être coupé à travers celles-ci.

6. Dispositif de commande de charges électriques selon la revendication 5, **caractérisé en ce que** les nombreuses charges électriques sont des bobines de solénoïde (L1 à L4) que l'on installe dans des injecteurs (31 à 34) et configurées pour ouvrir et fermer les injecteurs (31 à 34), respectivement, les injecteurs (31 à 34) étant connectés à un accumulateur de pression commun d'un moteur diesel, et comprenant:
une quatrième unité configurée pour alimenter un courant à travers la pluralité de bornes communes (COM1, COM2) aux bobines de solénoïde (L1 à L4) pendant des périodes correspondantes après que le courant déchargé depuis le condensateur (22) est alimenté à travers la pluralité de bornes communes (COM1, COM2) aux bobines de solénoïde (L1 à L4).
